# EUROPÄISCHE PATENTSCHRIFT

(11) **EP 0 455 637 B1**
(45) Veröffentlichungstag und Bekanntmachung des Hinweises auf die Patenterteilung: **02.03.1994**
(21) Anmeldenummer: 89911364.1
(22) Anmeldetag: 10.10.1989
(51) Int. Cl.: B30B 9/22, B01D 29/15, B01D 29/70, B01D 29/72, B01D 29/82

(54) **VERFAHREN UND VORRICHTUNG ZUM BETRIEB EINES AUSPRESSFILTERS FÜR FLÜSSIGKEITS-FESTSTOFF-GEMISCHE**
PROCESS AND DEVICE FOR OPERATING A PRESSURE FILTER FOR LIQUID-SOLID MIXTURES
PROCEDE ET DISPOSITIF POUR FAIRE FONCTIONNER UN FILTRE-PRESSE POUR DES MELANGES LIQUIDES/SOLIDES

(30) Priorität: 26.01.1989 DE 3902201
(43) Veröffentlichungstag der Anmeldung: 13.11.1991
(73) Patentinhaber: HEINKEL INDUSTRIEZENTRIFUGEN GMBH & CO., D-74321 Bietigheim-Bissingen (DE)
(72) Erfinder: GERTEIS, Hans, D-7120 Bietigheim-Bissingen (DE)
(74) Vertreter: Hoeger, Stellrecht & Partner
(86) Internationale Anmeldenummer: EP8901190
(87) Internationale Veröffentlichungsnummer: WO9008646

(56) Entgegenhaltungen:
- DE-A- 3 516 819
- DE-A- 3 517 032

## Beschreibung

Die Erfindung betrifft ein Verfahren zum Betrieb eines Auspreßfilters für Flüssigkeits-Feststoff-Gemische mit einem Filterelement, mit einer flexiblen, das Filterelement überdeckenden, flüssigkeitsundurchlässigen Membran, wobei das Flüssigkeits-Feststoff-Gemisch in den Raum zwischen Filterelement und Membran einführbar ist, und mit einem Vorratsgefäß für ein flüssiges Druckmedium, mit dem die dem Flüssigkeits-Feststoff-Gemisch abgekehrte Seite der Membran beaufschlagbar ist, so daß durch den vom Druckmedium erzeugten Druck auf die Membran die Flüssigkeit durch das Filterelement hindurchgepreßt und der entfeuchtete Feststoff vom Filterelement zurückgehalten wird. Außerdem betrifft die Erfindung eine Vorrichtung zur Durchführung eines solchen Verfahrens.

Beim Arbeiten mit einem Auspreßfilter dieser Art (DE 35 16 819 A1) hängt die Preßzeit, also diejenige Zeit, während welcher die Membran mit dem Druckmedium beaufschlagt wird, naturgemäß vom Entfeuchtungsverhalten des verarbeiteten Flüssigkeits-Feststoff-Gemisches ab. In jedem Falle muß sichergestellt sein, daß ein zufriedenstellender Trocknungsgrad erzielt wird. Um einen solchen Trocknungsgrad auch bei den schlechtesten Bedingungen zu erreichen, wird daher die Preßzeit sicherheitshalber so gewählt, daß in jedem Fall der gewünschte Trocknungsgrad erzielt wird. Hierbei geht jedoch Zykluszeit ungenutzt dann verloren, wenn der Trocknungsgrad bereits vor Ablauf der verhältnismäßig lang dauernd bemessenen Preßzeit erreicht ist. Eine optimale Auslastung des Auspreßfilters ergibt sich daher nur mit flexiblen Preßzeiten, die je nach dem vorliegenden Entfeuchtungsverhalten des behandelten Flüssigkeits-Feststoff-Gemisches ausgewählt werden. Theoretisch ist es möglich, das ablaufende Filtrat mit Hilfe von Meßeinrichtungen im Durchlauf zu messen und den Preßvorgang dann abzuschalten, wenn kein Filtrat oder nur noch wenig Filtrat abläuft. Man könnte das Filtrat auch in einem gesonderten Auffangbehälter erfassen und den Preßvorgang dann abschalten, wenn ein bestimmtes Volumen an Filtrat erreicht ist. Da jedoch das Filtrat immer noch mit Feststoff beladen ist, verschmutzen die Meßeinrichtungen im Dauerbetrieb und geben zu Fehlmessungen Anlaß. Außerdem handelt es sich bei dem Filtrat häufig um aggressive Flüssigkeiten, die mit üblichen Meßeinrichtungen nicht ohne weiteres meßbar sind. Umständlich wäre ferner auch die zyklische Entleerung eines gesonderten Filtrat-Auffangbehälters im Chargenbetrieb.

Es ist Aufgabe der Erfindung, den geschilderten Mängeln abzuhelfen und ein Verfahren anzugeben, mit dessen Hilfe in einfacher und sicherer Weise der jeweils vorliegende Entfeuchtungsgrad festgestellt werden kann.

Die Aufgabe wird erfindungsgemäß dadurch gelöst, daß man zur Erzielung eines gewünschten Entfeuchtungsgrades als Meßgröße die pro Zeiteinheit zugeführte Menge an Druckmedium laufend bestimmt und die Zuführung des Druckmediums unterbricht, wenn die Meßgröße einen vorgegebenen Wert erreicht hat.

Die nachstehende Beschreibung einer bevorzugten Ausführungsform der Erfindung dient im Zusammenhang mit beiliegender Zeichnung der weiteren Erläuterung. Es zeigen:
- Figur 1: schematisch ein Auspreßfilter im geschlossenen Zustand und
- Figur 2: das Filter aus Figur 1 in geöffnetem Zustand.

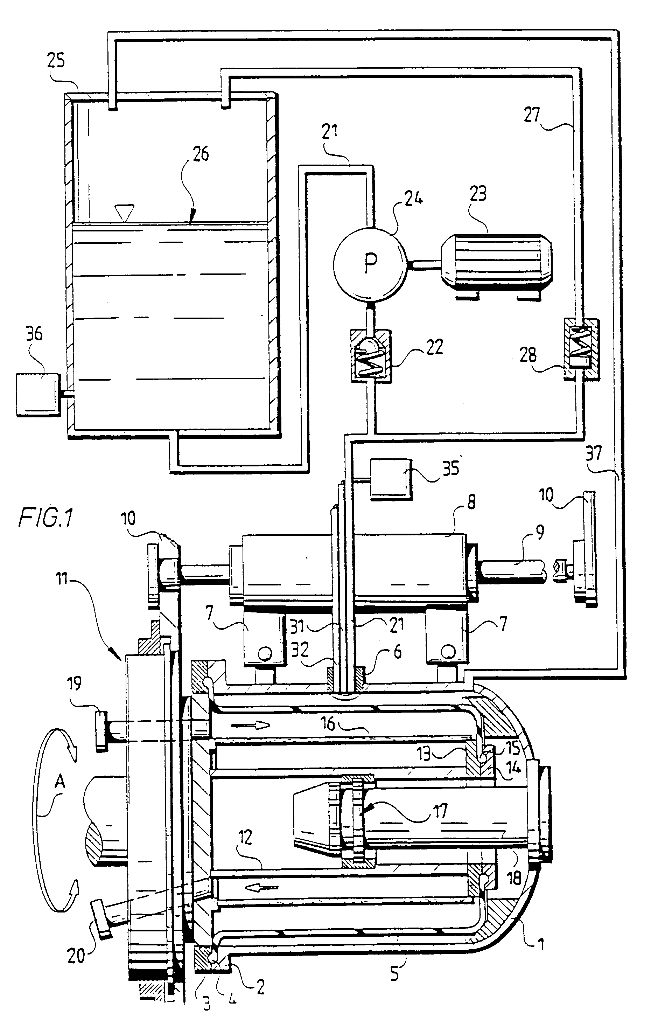

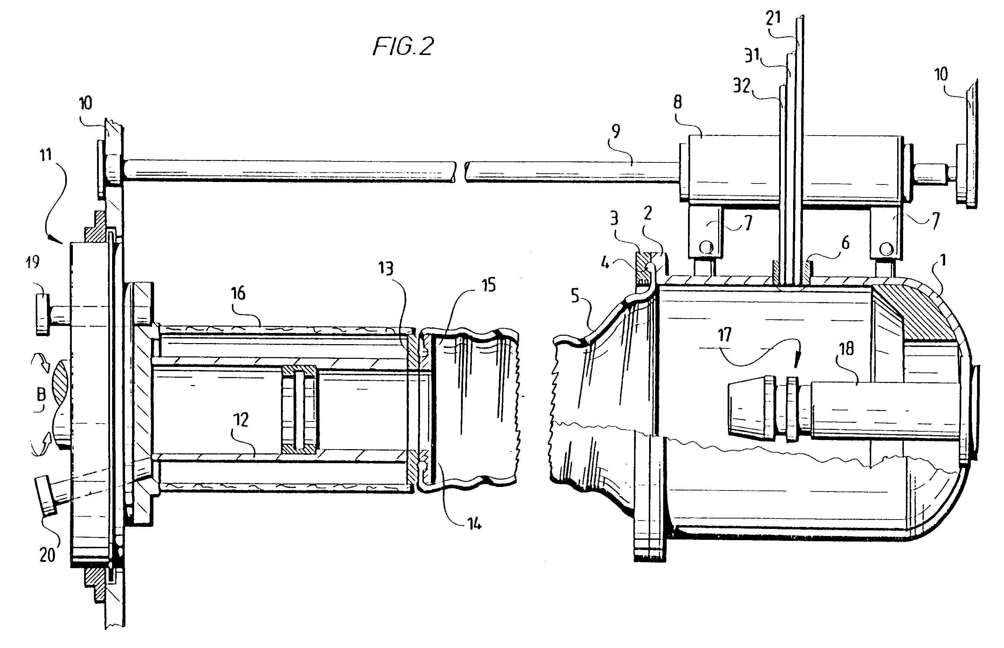

Das auf der Zeichnung dargestellte Auspreßfilter umfaßt einen kesselförmigen Außenmantel 1 von kreisrundem Querschnitt, der an seiner einen (in Figur 1 und 2 rechts gelegenen) Stirnseite geschlossen und an seiner gegenüberliegenden Stirnseite offen ist. An seiner offenen Stirnseite weist der Außenmantel 1 einen aus zwei Teilen 2, 3 bestehenden Umfangsflansch auf, zwischen die der eine Randbereich 4 einer schlauchförmigen, flüssigkeitsundurchlässigen Membran 5 aus flexiblem, elastisch dehnbarem Material fest eingespannt ist. Vom Außenmantel geht nach oben ein Saug- und Druckstutzen 6 ab, in den mehrere, später noch zu beschreibende Leitungen einmünden. Der Außenmantel 1 ist ferner über eine Tragkonstruktion 7 mit einer Laufbuchse 8 lösbar verbunden, die auf einer ortsfesten Stange 9 parallel zur Achse des Außenmantels 1 verschieblich ist.

In einem ortsfesten, die Stange 9 tragenden Maschinengestell 10 ist fest oder drehbar ein Deckel 11 zum dichten Verschließen der offenen Stirnseite des Außenmantels 1 gelagert. Von der den Außenmantel 1 zugewandten Innenseite des Deckels 11 steht starr ein Rohr 12 ab. Dieses trägt an seinem freien Ende einen Stirnflansch, der ähnlich wie der Flansch an der offenen Stirnseite des Außenmantels 1 aus zwei Teilen 13, 14 besteht. Zwischen diesen Teilen 13, 14 ist der andere Rand 15 der schlauchförmigen Membran 5 fest eingespannt.

Zwischen der Innenseite des Deckels 11 und dem Flanschteil 13 erstreckt sich ein rohrförmiges Filterelement 16, beispielsweise in Gestalt eines mit einem Filtertuch belegten Siebzylinders. Das Filterelement 16 liegt abgedichtet an der Innenseite des Deckels 11 bzw. am Flanschteil 13 an.

Im geschlossenen Zustand des Filters (Figur 1) erstreckt sich die schlauchförmige Membran 5 koaxial zwischen der Innenseite des Außenmantels 1 und der Außenseite des Filterelements 16. Im geöffneten Zustand des Filters (Figur 2), wenn also Außenmantel 1 und Deckel 11 durch Verschieben der Buchse 8 auf der Stange 9 in Richtung ihrer gemeinsamen Achse voneinander abgezogen sind, hat sich die Membran 5 gegenüber der Anordnung in Figur 1 umgestülpt, so daß die Innenseite der Membran nunmehr zu ihrer Außenseite geworden ist.

Während des eigentlichen Filtriervorganges ist das Auspreßfilter geschlossen, wie in Figur 1 dargestellt. Dabei ist der Außenmantel 1 über einen im Inneren des Rohres 12 befindlichen Bajonettverschluß 17, der teilweise von einem von der geschlossenen Stirnseite des Außenmantels 1 nach innen vorstehenden Arm 18 getragen wird, fest mit dem Deckel 11 verbunden.

Vom Stutzen 6 geht eine erste Leitung 21 ab, die über ein Rückschlagventil 22 mit der Druckseite einer von einem Elektromotor 23 angetriebenen Hochdruckpumpe 24 verbunden ist. Die Saugseite der Pumpe 24 ist über einen weiteren Abschnitt der Leitung 21 mit der Unterseite eines Vorratsgefäßes 25 verbunden, das ein flüssiges Druckmedium 26, z. B. Wasser oder Öl enthält. Die Leitung 21 ist hinter der Pumpe 24 über eine Bypassleitung 27 mit dem Vorratsgefäß 25 verbunden. Die Leitung 27 enthält ein Überdruckventil 28, das öffnet, wenn der Druck in der Leitung 21 und damit im Raum zwischen Außenmantel 1 und Membran 5 einen bestimmten Wert übersteigt.

Über eine weitere Leitung 31 kann (in nicht dargestellter Weise) Druckmedium 26 aus dem Raum zwischen Außenmantel 1 und Membran 5 in das Vorratsgefäß 25 zurückgeführt werden. Über eine weitere Leitung 32 ist es möglich, im Raum zwischen Außenmantel 1 und Membran 5 einen Unterdruck zu erzeugen, so daß sich die Membran 5 an die Innenseite des Außenmantels 1 anlegt.

Mit dem beschriebenen Auspreßfilter wird in folgender Weise gearbeitet: durch Anlegen von Unterdruck an die in den Stutzen 6 mundende Leitung 32 wird die Membran 5 etwa in die in Figur 1 dargestellte Lage verbracht. Über eine am Deckel 11 vorgesehene Zulaufleitung 19 wird ein zu filtrierendes Flüssigkeits-Feststoff-Gemisch (Suspension) in den Raum zwischen Membran 5 und Filterelement 16 eingefüllt. Nach Beendigung des Einfüllvorgangs wird mittels der Pumpe 24 Druckmedium 26 aus dem Vorratsgefäß 25 auf die dem Flüssigkeit-Feststoff-Gemisch abgekehrte Seite der Membran, also in den Raum zwischen Außenmantel 1 und Membran 5 eingeleitet und damit in diesem Raum ein Überdruck erzeugt, durch welchen die Membran 5 gegen das Filterelement 16 gedrückt wird, um die im Gemisch enthaltene Flüssigkeit möglichst restlos durch das Filterelement 16 hindurchzupressen. Die festen Bestandteile des Gemisches verbleiben als Filterkuchen auf dem Filterelement 16, während das durch das Filterelement 16 durchgepreßte, flüssige Filtrat über eine ebenfalls am Deckel 11 vorgesehene Ablaufleitung 20 abfließt. Nach Beendigung des Filtriervorgangs, also nach Erreichen eines bestimmten Entfeuchtungsgrades im Filterkuchen, wird das Druckmedium über die Leitung 31 wieder in das Vorratsgefäß 25 zurückgepumpt. Im geöffneten Zustand des Filters (Figur 2) kann alsdann der Filterkuchen vom Filterelement 16 entfernt werden.

Im Anschluß an einen Filtriervorgang kann das Auspreßfilter gereinigt werden. Die Membran 5 wird hierzu bei geschlossenem Auspreßfilter wieder durch über die Leitung 32 erzeugten Unterdruck vom Filterelement 16 abgehoben, wobei sie sich fest an die Innenseite des Außenmantels 1 anpressen kann. Über die Ablaufleitung 20 wird Waschflüssigkeit zur Rückspülung des Filterelements 16 eingebracht. Die Waschflüssigkeit kann anschließend durch Andrücken der (über die Leitungen 21 oder 32) unter Überdruck gesetzten Membran 5 an das Filterelement 16 wieder abgepreßt werden.

Wenn der Deckel 11 des Auspreßfilters im Maschinengestell 10 drehbar gelagert ist, kann das gesamte Auspreßfilter während des Filtriervorgangs in Richtung des Doppelpfeils A (Figur 1) hin- und herverschwenkt werden, um eine gleichmäßige Ausbildung des Filterkuchens zu gewährleisten. Beim Abwurf des Filterkuchens im geöffneten Zustand des Auspreßfilters kann der Deckel 11 bei feststehendem Außenmantel 1 in Richtung des Doppelpfeils B (Figur 2) hin- und herverschwenkt werden, um hierdurch den Abwurf des Filterkuchens zu begünstigen.

Zur Überführung des Auspreßfilters aus dem geschlossenen Zustand (Figur 1) den geöffneten Zustand (Figur 2) kann nach dem Entriegeln des Bajonettverschlusses 17 über die Leitung 32 auch Druckluft in den Raum zwischen Außenmantel 1 und Membran 5 eingebracht werden. Es ist ferner zweckmäßig, bei Überführung des Auspreßfilters aus dem geöffneten Zustand (Figur 2) in den geschlossenen Zustand (Figur 1) über die Leitung 32 Unterdruck oder Vakuum anzulegen, weil hierdurch das Einstülpen der Membran 5 erleichtert wird. Dabei ist es sinnvoll, beim Schließen des Auspreßfilters zunächst nicht den vollen Unterdruck anzulegen, sondern nur einen geringeren Druck, der ausschließlich der besseren Einstülpung der Membran 5 dient. Erst in der Schlußphase des Schließvorgangs, wenn der Außenmantel 1 über eine im Deckel 11 vorgesehene Radialdichtung gelangt, wird der volle Unterdruck eingeschaltet.

Die Bestimmung des Entfeuchtungsgrades an dem sich auf dem Filterelement 16 absetzenden Filterkuchen wird erfindungsgemäß durch die pro Zeiteinheit zugeführte Menge an Druckmedium 26 in den Raum zwischen Außermantel 1 und Membran 5 bestimmt, wobei man die Zuführung des Druckmediums unterbricht, wenn die pro Zeiteinheit zugeführte Menge an Druckmedium einen vorgegebenen, kleinen Wert erreicht hat. Man stellt also nicht fest, ob kein Filtrat oder nur noch sehr wenig Filtrat ausfließt, sondern mißt die Zuströmgeschwindigkeit des Druckmediums und sieht den Filtriervorgang dann als beendet an, wenn kein oder nur noch sehr wenig Druckmedium 26 in den Raum zwischen Außenmantel 1 und Membran 5 einfließt.

Um die pro Zeiteinheit zugeführte Menge an Druckmedium 26, also die Strömungsgeschwindigkeit dieses Mediums zu messen, ist an der Leitung 21 ein Meßinstrument 35 in Gestalt eines Strömungsgeschwindigkeitsmessers angeordnet. Bei Erreichen einer bestimmten kleinen Strömungsgeschwindigkeit erzeugt dieses Meßinstrument 35 in an sich bekannter Weise ein Signal oder einen Impuls, der das Erreichen eines bestimmten, gewünschten Entfeuchtungs- oder Trocknungsgrades anzeigt, so daß dann der oben beschriebene Zyklus des Filtriervorgangs weitergeführt werden kann. Statt des als Strömungsgeschwindigkeitsmesser ausgebildeten Meßinstruments 35 kann am Vorratsgefäß 25 auch ein Meßinstrument 36 angeordnet werden, welches die Abnahmegeschwindigkeit der Standhöhe des Druckmediums 26 im Vorratsgefäß 25 mißt. Wenn diese Geschwindigkeit einen bestimmten kleinen Wert erreicht hat, wird in gleicher Weise ein Signal oder Impuls für die Weiterführung des Filtrierzyklus ausgelöst.

Mißt man die Änderungsgeschwindigkeit der Standhöhe mit Hilfe des Elementes 36 so ist es zweckmäßig, sämtliche von dem mit Druckmedium versorgten Raum zwischen Außenmantel 1 und Membran 5 abgehende Leitungen zur Volumenneutralisation in das Vorratsgefäß 25 zurückzuführen. Dies ist in Figur 1 anhand einer Entlüftungsleitung 37 zwischen Auspreßfilter und Vorratsgefäß 25 beispielsweise dargestellt. Die Entlüftungsleitung 37 hat einen wesentlich kleineren Querschnitt als die Leitung 21, so daß sie für in ihr zurückströmendes Druckmedium eine Drosselwirkung entfaltet. Die gleiche Wirkung erhält man auch durch eine in die Leitung 37 eingebaute Drossel.

Es hat sich ferner als vorteilhaft erwiesen, die Messung der pro Zeiteinheit zugeführten Menge an Druckmedium mit Hilfe der Meßinstrumente 35 und/oder 36 erst dann zu beginnen, wenn auf der vom Druckmedium 26 beaufschlagten Seite der Membran 5, also im Raum zwischen Außenmantel 1 und Membran 5, ein bestimmter Überdruck herrscht.

Die Erfindung wurde im voranstehenden am Ausführungsbeispiel eines Auspreßfilters mit umstülpbarer Membran 5 beschrieben. Sie läßt sich in gleicher Weise und ohne weiteres jedoch auch auf Auspreßfilter anderer Art, also ohne umstülpbare Membran, anwenden, wenn an solchen Auspreßfiltern ein mit Druckmedium beaufschlagbarer Raum vorgesehen ist, so daß durch ein eingefülltes Druckmedium eine Membran in Richtung auf ein Filterelement hin bewegt werden kann, um so eine in den Raum zwischen Membran und Filterelement eingefüllte Suspension auszupressen. Hierbei kommen in erster Linie sogenannte Membranblöcke in Frage, bei denen nebeneinander und abwechselnd mehrere, ebene Filterelemente mit beidseits zugeordneten Membranen vorgesehen sind.

## Patentansprüche

1. Verfahren zum Betrieb eines Auspreßfilters für Flüssigkeits-Feststoff-Gemische mit einem Filterelement (16), mit einer flexiblen, das Filterelement überdeckenden, flüssigkeitsundurchlässigen Membran (5), wobei das Flüssigkeits-Feststoff-Gemisch in den Raum zwischen Filterelement und Membran einführbar ist, und mit einem Vorratsgefäß (25) für ein flüssiges Druckmedium (26), mit dem die dem Flüssigkeits-Feststoff-Gemisch abgekehrte Seite der Membran beaufschlagbar ist, so daß durch den vom Druckmedium erzeugten Druck auf die Membran die Flüssigkeit durch das Filterelement hindurchgepreßt und der entfeuchtete Feststoff vom Filterelement zurückgehalten wird,
**dadurch gekennzeichnet,**
daß man zur Erzielung eines gewünschten Entfeuchtungsgrades als Meßgröße die pro Zeiteinheit zugeführte Menge an Druckmedium (26), laufend bestimmt und die Zuführung des Druckmediums unterbricht, wenn die Meßgröße einen vorgegebenen Wert erreicht hat.

2. Verfahren nach Anspruch 1, dadurch gekennzeichnet, daß man die Messung der pro Zeiteinheit zugeführten Menge an Druckmedium (26) erst dann beginnt, wenn auf der vom Druckmedium beaufschlagten Seite der Membran (5) ein bestimmter Druck herrscht.

3. Verfahren nach Anspruch 1, dadurch gekennzeichnet, daß man zur Bestimmung der pro Zeiteinheit zugeführten Menge an Druckmedium (26) die zeitliche Abnahme der Standhöhe des Druckmediums im Vorratsgefäß (25) mißt.

4. Verfahren nach Anspruch 3, dadurch gekennzeichnet, daß Verlustmengen des der Membran (5) zugeführten Druckmediums (26) in das Vorratsgefäß (25) zurückgeführt werden.

5. Vorrichtung zur Durchführung des Verfahrens nach Anspruch 1 mit einem Filterelement (16) für ein Flüssigkeits-Feststoff-Gemisch, mit einer flexiblen, das Filterelement überdeckenden, flüssigkeitsundurchlässigen Membran (5), wobei das Flüssigkeits-Feststoff-Gemisch in den Raum zwischen Filterelement und Membran einführbar ist, und mit einem Vorratsgefäß (25) für ein flüssiges Druckmedium (26), mit dem die dem Flüssigkeits-Feststoff-Gemisch abgekehrte Seite der Membran beaufschlagbar ist, gekennzeichnet durch ein Meßinstrument (35, 36) zur Bestimmung der Strömungsgeschwindigkeit des aus dem Vorratsgefäß (25) zur Membran (5) fließenden Druckmediums.

6. Vorrichtung nach Anspruch 5, dadurch gekennzeichnet, daß das Meßinstrument (36) die zeitliche Abnahme der Standhöhe des Druckmediums (26) im Vorratsgefäß (25) mißt.

7. Vorrichtung nach Anspruch 6, gekennzeichnet durch eine das Auspreßfilter mit dem Vorratsgefäß (25) verbindende Entlüftungsleitung (37), über welche Rest- oder Verlustmengen des Druckmediums (26) in das Vorratsgefäß zurückfließen.

## Claims

1. A method of operating a pressure filter for liquid-solid mixtures, the said pressure filter comprising a filter element (16), a flexible membrane (5) impermeable to liquid and covering the filter element, the liquid-solid mixture being introducible into the space between the filter element and the membrane, and a reservoir (25) for a liquid pressure medium (26) which can act on the side of the membrane facing away from the liquid-solid mixture in such a way that the liquid is forced through the filter element as a result of the pressure generated by the pressure medium on the membrane and the dehydrated solid is retained by the filter element, characterised in that in order to obtain a desired level of dehydration, the quantity of pressure medium (26) supplied per unit time is continuously determined as the measured quantity and the supply of pressure medium is interrupted when the measured quantity has reached a predetermined value.

2. A method according to claim 1, characterised in that measurement of the quantity of pressure medium (26) supplied per unit time is not begun until there is a specified pressure on the side of the membrane (5) acted upon by the pressure medium.

3. A method according to claim 1, characterised in that in order to determine the quantity of pressure medium (26) supplied per unit time, the rate of reduction of the level of the pressure medium in the reservoir (25) is measured.

4. A method according to claim 3, characterised in that lost quantities of the pressure medium (26) supplied to the membrane (5) are fed back to the reservoir (25).

5. A device for carrying out the method according to claim 1, comprising a filter element (16) for a liquid-solid mixture, a flexible membrane (5) impermeable to liquid and covering the filter element, the liquid-solid mixture being introducible into the space between the filter element and the membrane, and a reservoir (25) for a liquid pressure medium (26) which can act on the side of the membrane facing away from the liquid-solid mixture, characterised by a measuring instrument (35, 36) for determining the flow rate of the pressure medium flowing from the reservoir (25) to the membrane (5).

6. A device according to claim 5, characterised in that the measuring instrument (36) measures the rate of reduction of the level of the pressure medium (26) in the reservoir (25).

7. A device according to claim 6, characterised by a vent line (37) which connects the pressure filter to the reservoir (25) and by means of which residual or lost quantities of the pressure medium (26) flow back into the reservoir.

## Revendications

1. Procédé pour faire fonctionner un filtre-presse destiné à des mélanges liquides/solides et comprenant un élément filtrant (16), une membrane flexible (5), imperméable aux liquides, recouvrant l'élément filtrant, le mélange liquide/solide pouvant être introduit dans l'espace entre l'élément filtrant et la membrane, et un réservoir (25) de fluide hydraulique à l'état liquide (26), qui permet de solliciter le côté de la membrane qui est opposé au mélange liquide/solide, de sorte que, par la pression exercée par le fluide hydraulique sur la membrane, le liquide du mélange est pressé à travers l'élément filtrant tandis que la matière solide déshumidifiée est retenue par l'élément filtrant, caractérisé en ce qu'afin d'obtenir un degré souhaité de déshumidification, on détermine en continu, comme grandeur mesurée, la quantité de fluide hydraulique (26) apportée par unité de temps, et on interrompt l'apport de fluide hydraulique lorsque la grandeur mesurée a atteint une valeur prédéterminée.

2. Procédé selon la revendication 1, caractérisé en ce qu'on ne commence à mesurer la quantité de fluide hydraulique (26) apportée par unité de temps qu'une fois qu'une pression donnée règne sur le côté de la membrane (5) qui est sollicité par le fluide hydraulique.

3. Procédé selon la revendication 1, caractérisé en ce qu'afin de déterminer la quantité de fluide hydraulique (26) apportée par unité de temps, on mesure la diminution dans le temps du niveau de fluide hydraulique (26) dans le réservoir (25).

4. Procédé selon la revendication 3, caractérisé en ce que les quantités perdues de fluide hydraulique (26) apporté à la membrane (5) sont renvoyées dans le réservoir (25).

5. Dispositif pour la mise en oeuvre du procédé selon la revendication 1, comprenant un élément filtrant (16) destiné à un mélange liquide/solide, une membrane flexible (5), imperméable aux liquides, recouvrant l'élément filtrant, le mélange liquide/solide pouvant être introduit dans l'espace entre l'élément filtrant et la membrane, et un réservoir (25) de fluide hydraulique à l'état liquide (26), qui permet de solliciter le côté de la membrane qui est opposé au mélange liquide/solide, caractérisé par un instrument de mesure (35, 36) pour déterminer la vitesse d'écoulement du fluide hydraulique qui s'écoule du réservoir (25) vers la membrane (5).

6. Dispositif selon la revendication 5, caractérisé en ce que l'instrument de mesure (36) mesure la diminution dans le temps du niveau de fluide hydraulique (26) dans le réservoir (25).

7. Dispositif selon la revendication 6, caractérisé par une conduite de purge (37), qui relie le filtre-presse au réservoir (25), par l'intermédiaire de laquelle les quantités résiduelles ou perdues de fluide hydraulique (26) retournent dans le réservoir.
